Europäisches Patentamt

(19) European Patent Office

Office européen des brevets

(11) EP 0 720 103 A1

(12) EUROPEAN PATENT APPLICATION

(43) Date of publication:
03.07.1996 Bulletin 1996/27

(51) Int. Cl.6: G06F 17/14

(21) Application number: 94120917.3

(22) Date of filing: 29.12.1994

(84) Designated Contracting States:
DE FR GB NL

(71) Applicant: DAEWOO ELECTRONICS CO., LTD
Jung-Gu, Seoul 100-095 (KR)

(72) Inventor: Kim, Seong-Jeong
Songpa-Ku, Seoul (KR)

(74) Representative: Turi, Michael, Dipl.-Phys. et al
Samson & Partner
Widenmayerstrasse 5
80538 München (DE)

cd(54) **Two-dimensional inverse discrete cosine transform circuit**

(57)     A novel IDCT (Inverse Discrete Cosine Transform) circuit includes a pair of one-dimensional IDCT circuits and a transposition memory to produce the two-dimensional IDCT of an NxN input matrix by a row-column decomposition method, wherein the input matrix is multiplied by an NxN IDCT matrix in the first IDCT circuit to yield an intermediate matrix; stored in the transposition memory; and the transpose of the intermediate matrix is multiplied by the same IDCT coefficient matrix in the second IDCT circuit to yield the desired inverse transformed matrix.

Each of the one-dimensional IDCT circuits, which perform IDCT operation by multiplying a predetermined IDCT matrix, includes a plurality of PLAs each of which multiplies input data thereto with a predetermined multiplication coefficient which is an element of said IDCT matrix.

FIG.1

EP 0 720 103 A1

**Description**

Field of the Invention

The present invention relates to a circuit for performing a two-dimensional inverse discrete cosine transform(IDCT); and, more particularly, to a two-dimensional IDCT circuit which uses a pair of improved one-dimensional IDCT circuits wherein each of the circuits performs an IDCT operation by using a matrix multiplication.

Description of the Prior Art

As is well known, transmission of digitized video signals can deliver video images of much higher quality than the transmission of analog signals. When an image signal comprising a sequence of image "frames" is expressed in a digital form, a substantial amount of data is generated for transmission, especially in the case of a high definition television system. Since, however, the available frequency bandwidth of a conventional transmission channel is limited, in order to transmit the substantial amounts of digital data through the limited channel bandwidth, it is inevitable to compress or reduce the volume of the transmission data.

The image signal can be normally compressed without seriously affecting its integrity because there usually exist certain correlationships or redundancies among some of the pixels in a single frame and also among those of neighboring frames. Accordingly, most of prior art image signal encoding methods employ various compression techniques (or coding methods) built on the idea of utilizing or truncating the redundancies.

One category of such coding methods relates to transform techniques which take advantage of the redundancies existing in a single frame. One of such transform methods is a two-dimensional(2-D) Discrete Cosine Transform(DCT), described in Chen and Pratt, "Scene Adaptive Coder", IEEE Transactions on Communication, COM-32, No. 3(March 1984). DCT is considered to be a most effective technique among various transform coding methods for image compression or video bandwidth compression. In achieving bandwidth compression through DCT, a square block of digitally encoded pixels can be transformed into the frequency domain by means of a two-dimensional or NxN DCT processor for performing the two-dimensional DCT by a row-column decomposition method, wherein the NxN block of pixel data is inputted thereto, the input matrix is multiplied by an NxN DCT matrix to yield an intermediate matrix, and then the transpose of the intermediate matrix is multiplied by the same DCT matrix to yield the desired inverse transformed matrix. The elements of the transformed matrix can then be quantized and only the most energetic terms therein are selected for transmission. At the receiver end, an inverse discrete cosine transform (IDCT) is performed to reconstruct the original video signal in the spatial domain. IDCT can also be performed by a multiplication with an IDCT matrix and a transposition followed by another matrix multiplication.

Since an IDCT circuit for use in a practical image decoding system needs a rapid convolution operation capability, numerous schemes for the fast operation of IDCT including the VLSI(Very Large Scale Integration) implementation have been proposed.

Matrix multiplication involves forming the inner products of two N dimensional vectors to yield a single element of the product matrix. Thus, each element in a row of the input matrix is multiplied by each of the corresponding elements of a column of the DCT/IDCT matrix and the products are summed to yield a single element of the product matrix. For the transform of an 8x8 block of pixels, 8 products are summed to yield a single element of the output matrix which has 64 elements. Many fast algorithms have been derived to reduce the number of computations required. For example, the DCT/IDCT matrix is decomposed into several sparse matrices, which result in butterfly structures. An example of VLSI implementation using such a structure is described in an article entitled, "A Discrete Fourier-Cosine Transform Chip" in IEEE Journal on Selected Areas on Communication, Jan., '86, pp.49-61. The butterfly structures reduce the number of computations significantly but still require many high speed multipliers, which in turn requires a large chip area for IC (integrated circuit) implementation. In addition, other drawbacks of the butterfly structures such as messy interconnections and poor routing on chips tend to make VLSI implementation of butterfly structures rather inefficient.

U. S. Patent No. 4,791,598 issued to M. L Niou et al. provides another DCT/IDCT scheme involving a distributed arithmetic combined with decimation-in-frequency, bit-serial structures, and partial sums to implement vector inner products concurrently with a minimal memory size. The result is an architecture with a highly regular structure and no multipliers. This is possible because of the inherent properties of the transform operations: namely, the elements in the transform matrix are constants which permits the use of distributed arithmetic wherein memory lookup tables, or Read Only Memories(ROMs), are used as a substitute for multipliers; and the matrix-vector products are realized by several concurrent vector inner products. This scheme is efficient in that it has no multipliers and uses a highly regulated structure.

However, the circuitry for supporting the above methods tends to be complicated. In addition, by employing the bit-serial data structure, matrix multiplication is performed bitwise, e.g, one bit at one clock cycle, which makes the method unsuitable for real time application.

## Summary of the Invention

It is, therefore, a primary object of the present invention to provide a high speed IDCT circuit with a reduced hardware complexity which is applicable to a real time image processing system, wherein Programmable Logic Arrays (PLAs) are employed for the matrix multiplication performed in the IDCT operation.

In accordance with the present invention, there is provided a one-dimensional Inverse Discrete Cosine Transform (IDCT) circuit for performing an IDCT operation on N input data to thereby provide N output data, wherein said N input data consists of N/2 odd-numbered input data and N/2 even-numbered input data, comprising:

first multiplication means for performing a predetermined even IDCT matrix multiplication on said even-numbered input data, thereby providing a first set of N/2 intermediate data, wherein said first means includes a plurality of multipliers and a multiplicity of adders to perform the even IDCT matrix multiplication on the N/2 even-numbered input data;

second multiplication means for performing a predetermined odd IDCT matrix multiplication on said odd-numbered input data, thereby providing a second set of N/2 intermediate data, wherein said second means includes a host of multipliers and a multitude of adders to perform the odd IDCT matrix multiplication on the N/2 odd-numbered input data;

addition means for adding each of the first set of N/2 intermediate data to each corresponding data of the second set of intermediate data, to thereby provide first N/2 output data; and

subtraction means for subtracting each of the second set of N/2 intermediate data from each corresponding data of the first set of N/2 intermediate data, to thereby provide second N/2 output data.

## Brief Description of the Drawings

The above and other objects and features of the present invention will become apparent from the following description of preferred embodiments given in conjunction with the accompanying drawings, in which:

Fig. 1 shows a block diagram of the one-dimensional IDCT circuit of the present invention;
Fig. 2 depicts a detailed structure of multipliers shown in Fig. 1;
Fig. 3 is a block diagram of the two-dimensional IDCT circuit of the present invention;
Fig. 4 represents a detailed block diagram of the transposition memory shown in Fig. 3;
Fig. 5A to 5B present diagrams for explaining the operation of the transposition memory; and
Fig. 6 offers a circuit for generating address and enable signals for the transposition memory.

## Detailed Description of the Preferred Embodiments

The Discrete Cosine Transform(DCT) is an orthogonal transform consisting of a set of basis vectors which are sampled cosine functions. Assuming that $N(N=2^n$; n is a positive integer)-point one-dimensional DCT input data is $x_j$ and output data is $y_i$, the output data $y_i$ may be expressed as:

$$y_i = \sqrt{2/N} \cdot \sum_{j=0}^{N-1} x_j \cdot u(i) \cdot \cos[(2j+1)\,i\pi/2N] \qquad \text{Eq. (1)}$$

wherein i = 0, 1, ..., N-1, j = 0, 1, ..., N-1, and

$$u(i) = \begin{pmatrix} 1/\sqrt{2}, i=0 \\ 1 , i=1,2,...,N\text{-}1 \end{pmatrix}$$

Eq. (1) may be further represented by a matrix, as follows:

$$y = Dx \qquad \text{Eq. (2)}$$

wherein **x** is an N dimensional input vector and given by,

$$x = \begin{pmatrix} x_0 \\ x_1 \\ x_2 \\ . \\ . \\ . \\ x_{N-1} \end{pmatrix} \qquad \text{Eq. (3)}$$

**y** is an N dimensional output vector and given by

$$y = \begin{pmatrix} y_0 \\ y_1 \\ y_2 \\ . \\ . \\ . \\ y_{N-1} \end{pmatrix} \qquad \text{Eq. (4)}$$

and **D** is an N x N DCT matrix and given by

$$D = \begin{pmatrix} d_{0,0} & d_{0,1} & d_{0,2} & \cdots & d_{0,N-1} \\ d_{1,0} & d_{1,1} & d_{1,2} & \cdots & . \\ . & . & . & \cdots & . \\ . & . & . & \cdots & . \\ d_{N-1,0} & d_{N-1,1} & d_{N-1,2} & \cdots & d_{N-1,N-1} \end{pmatrix} \qquad \text{Eq. (5)}$$

The elements of the DCT matrix **D** may be represented as

$$d_{i,j} = \sqrt{2/N} \cdot u(i) \cdot \cos[(2j+1) i\pi/2N] \qquad \text{Eq. (6)}$$

and related as:

$$d_{i,j} = (-1)^{i} \cdot d_{i,N-j-1} \qquad \text{Eq. (7)}$$

Assuming that N is "8", Eq. (2) may be modified by using the above relation, as follows:

$$\begin{pmatrix} y_0 \\ y_2 \\ y_4 \\ y_6 \\ y_1 \\ y_3 \\ y_5 \\ y_7 \end{pmatrix} = \begin{pmatrix} d_{0,0} & d_{0,1} & d_{0,2} & d_{0,3} & 0 & 0 & 0 & 0 \\ d_{2,0} & d_{2,1} & d_{2,2} & d_{2,3} & 0 & 0 & 0 & 0 \\ d_{4,0} & d_{4,1} & d_{4,2} & d_{4,3} & 0 & 0 & 0 & 0 \\ d_{6,0} & d_{6,1} & d_{6,2} & d_{6,3} & 0 & 0 & 0 & 0 \\ 0 & 0 & 0 & 0 & d_{1,0} & d_{1,1} & d_{1,2} & d_{1,3} \\ 0 & 0 & 0 & 0 & d_{3,0} & d_{3,1} & d_{3,2} & d_{3,3} \\ 0 & 0 & 0 & 0 & d_{5,0} & d_{5,1} & d_{5,2} & d_{5,3} \\ 0 & 0 & 0 & 0 & d_{7,0} & d_{7,1} & d_{7,2} & d_{7,3} \end{pmatrix} \cdot \begin{pmatrix} x_0+x_7 \\ x_1+x_6 \\ x_2+x_5 \\ x_3+x_4 \\ x_0-x_7 \\ x_1-x_6 \\ x_2-x_5 \\ x_3-x_4 \end{pmatrix} \qquad \text{Eq. (8)}$$

Using the relation of Eq. (7), it is possible to halve the required number of multiplication, of DCT coefficients, i.e., elements of the DCT matrix, and input data. Likewise, regarding IDCT, assuming that an input vector and an output vector are **y** and **x** as defined by Eqs. (3) and (4), respectively, the relation between **y** and **x** can be modified and represented as follows:

$$\begin{pmatrix} x_0+x_7 \\ x_1+x_6 \\ x_2+x_5 \\ x_3+x_4 \end{pmatrix} = \begin{pmatrix} c_4 & c_2 & c_4 & c_6 \\ c_4 & c_6 & -c_4 & -c_2 \\ c_4 & -c_6 & -c_4 & c_2 \\ c_4 & -c_2 & c_4 & -c_6 \end{pmatrix} \cdot \begin{pmatrix} y_0 \\ y_2 \\ y_4 \\ y_6 \end{pmatrix} \qquad \text{Eq. (9a)}$$

$$\begin{pmatrix} x_0-x_7 \\ x_1-x_6 \\ x_2-x_5 \\ x_3-x_4 \end{pmatrix} = \begin{pmatrix} c_1 & c_3 & c_5 & c_7 \\ c_3 & -c_7 & -c_1 & -c_5 \\ c_5 & -c_1 & c_7 & c_3 \\ c_7 & -c_5 & c_3 & -c_1 \end{pmatrix} \cdot \begin{pmatrix} y_1 \\ y_3 \\ y_5 \\ y_7 \end{pmatrix} \qquad \text{Eq. (9b)}$$

wherein the IDCT operation is represented by using an odd IDCT matrix and an even IDCT matrix. Elements of the odd and even IDCT matrices, e.g., c2 and c1, are obtained by inverting the modified DCT matrix of Eq. (8).

In Eqs. (9a) and (9b), N dimensional input vector is first divided into N/2 dimensional even-numbered input vector, e.g., (y0, y2, y4, y6), and odd-numbered input vector, e.g., (y1, y3, y5, y7). An even IDCT matrix of Eq. (9a) is multiplied with the even-numbered input vector to provide N/2 intermediate data, each of which is a sum of two elements of the output vector. Similarly, the odd-numbered input vector is multiplied with an odd IDCT matrix of Eq. (9b), to thereby provide another N/2 intermediate data, each of which is a difference of two elements of the output vector.

A prior art IDCT processor performs IDCT operation based on Eqs. (9a) and (9b), using the distributed arithmetic and bit serial data structure(see U. S. Patent No. 4,791,598 issued to M. L Niou et al.).

In accordance with the present invention, Eqs. (9a) and (9b) can be further modified as:

$$\begin{pmatrix} x_0+x_7+x_3+x_4 \\ x_1+x_6+x_2+x_5 \end{pmatrix} = \begin{pmatrix} c_4 & c_4 \\ c_4 & -c_4 \end{pmatrix} \cdot \begin{pmatrix} y_0 \\ y_4 \end{pmatrix} \qquad \text{Eq. (10a)}$$

$$\begin{pmatrix} x_1+x_6-x_2-x_5 \\ x_0+x_7-x_3-x_4 \end{pmatrix} = \begin{pmatrix} -c_2 & c_6 \\ c_6 & c_2 \end{pmatrix} \cdot \begin{pmatrix} y_6 \\ y_2 \end{pmatrix} \qquad \text{Eq. (10b)}$$

$$\begin{pmatrix} x_0-x_7 \\ x_1-x_6 \\ x_2-x_5 \\ x_3-x_4 \end{pmatrix} = \begin{pmatrix} c_1 & c_3 & c_5 & c_7 \\ c_3 & -c_7 & -c_1 & -c_5 \\ c_5 & -c_1 & c_7 & c_3 \\ c_7 & -c_5 & c_3 & -c_1 \end{pmatrix} \cdot \begin{pmatrix} y_1 \\ y_3 \\ y_5 \\ y_7 \end{pmatrix} \qquad \text{Eq. (10c)}$$

wherein the IDCT operation is represented by using reduced even IDCT matrices of Eqs. (10a) and (10b) which are obtained by modifying Eq. (9a); and the odd IDCT matrix of Eq. (9b) or (10c).

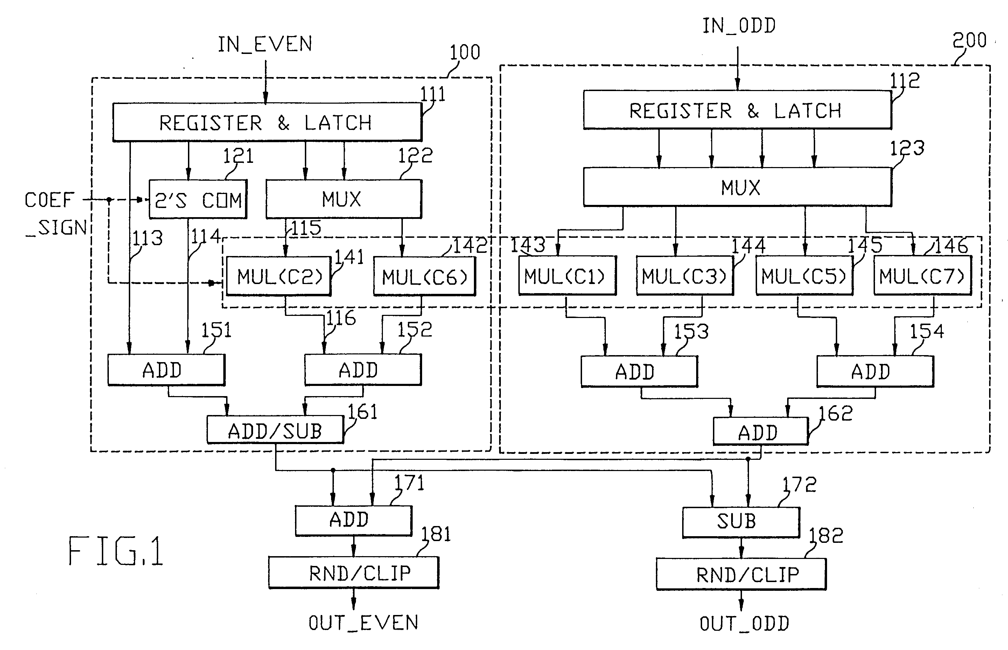

Referring to Fig. 1, there is a block diagram showing an IDCT circuit which performs the one-dimensional IDCT operation of Eqs. (10a) to (10c). An even IDCT block 100 performs the multiplication of the even IDCT matrix shown in Eq. (9a) while an odd IDCT block 200 performs the multiplication of the odd IDCT matrix shown in Eq. (9b). From Eqs. (9a) and (9b), it can be easily recognized that the two IDCT blocks 100 and 200 can be implemented in a same manner.

However, as explained above, the matrix multiplication of Eq. (9a) is reduced to those of Eq. (10a) and (10b), therefore, at the even IDCT block 100, the calculation of Eqs. (10a) and (10b) is performed to provide the result of Eq. (9a) for a more efficient processing.

An input vector, which is a row of an input matrix, is first separated into even-numbered and odd-numbered input vectors and fed to the even and odd IDCT blocks 100 and 200, respectively. For example, assuming that N=8, the input vector (y0, y1, y2, ... y7) is separated into (y0, y2, y4, y6) and (y1, y3, y5, y7); and a pair of input data, e.g., (y0, y1), is inputted on lines IN_EVEN and IN_ODD at a same clock cycle.

Specifically, the even-numbered input vector of Eqs. (10a) and (10b) is first sequentially fed to and stored in a register and latch block 111, and then outputted in parallel. The input vector is latched on the output port of the register and latch block 111 for 4 clock cycles. During that time, y2 and y6 are dispatched to multipliers 141 and 142, via a multiplexor(MUX) 122 for the computation of Eq. (10b). y0 and y4 are provided on line 113 and to a 2's complement converter 121, respectively, for the computation of Eq. (10a).

There are two multipliers, i.e., MUL(c2) 141 and MUL(c6) 142, in the even IDCT block 100 for performing the matrix multiplication of Eq. (10b). The calculated results from the multipliers 141 and 142 are fed to an adder 152. From the characteristic of cosine function, C4 in Eq. (10a) is 1 and need not be multiplied to the input data, e.g., y0 and y4 in Eq. (10a). Therefore, y0 is fed to an adder 151 directly and y4 is fed to the adder 151 via the 2's complement converter 121. The data processed herein is represented in a 2's complement form and the 2's complement converter 121 may convert the sign of the y4 for the computation of Eq. (10a) in response to COEF_SIGN, i.e., the signal which denotes the sign of an element in the reduced IDCT matrices. The operations of two multipliers 141 and 142 and the data provided on lines 113 and 114 are depicted in Table 1.

Table 1

| clock cycle | MUL(c2) | MUL(c6) | line 113 | line 114 |
|---|---|---|---|---|
| 1 | c2 x y2 | c6 x y6 | y0 | y4 |
| 2 | -c2 x y6 | c6 x y2 | y0 | -y4 |
| 3 | -c2 x y6 | c6 x y2 | y0 | -y4 |
| 4 | c2 x y2 | c6 x y6 | y0 | y4 |

Each row in Table 1 shows 4 input data to adders 151 and 152 at each clock cycle. The adder 151 adds two elements from the 4th and the 5th columns in a same row in each clock cycle, while the adder 152 adds those from the 2nd and the 3rd columns of Table 1. At the first and second clock cycles, the results from the two adders 151 and 152 are fed to the adder/subtractor 161 wherein the 4 elements in a row in Table 1 are added altogether. At the third and fourth clock cycles, the result of adder 152 is subtracted from that of adder 151 at the adder/subtractor 161.

The operations performed in the adders 151 and 152 and adder/subtractor 161 can be summarized by using the relationship of Eqs. (10a) to (10c) shown in Table 2.

Table 2

| clock cycle | ADD 151 | ADD 152 | ADD/SUB 161 |
|---|---|---|---|
| 1 | x0+x7+x3+x4 | x0+x7-x3-x4 | x0 + x7 |
| 2 | x1+x6+x2+x5 | x1+x6-x2-x5 | x1 + x6 |
| 3 | x1+x6+x2+x5 | x1+x6-x2-x5 | x2 + x5 |
| 4 | x0+x7+x3+x4 | x0+x7-x3-x4 | x3 + x4 |

It can be easily seen that the outputs of the adders 151 and 152 is same as the results of Eqs. (10a) and (10b) and the output of the adder/subtractor 161 is same as the result of Eq. (9a). As can be seen in Tables 1 and 2, the same operation is performed twice in the multipliers 141 and 142 and adders 151 and 152 to provide the desired result at the adder/subtractor 161. As explained above, the even IDCT block 100 performs the operation of multiplying the even IDCT matrix with the even-numbered input vector as shown in Eq. (9a).

The overall operation of the odd IDCT block 200 is similar to that of the even IDCT block 100, except that 4 multipliers are needed for c1, c3, c5 and c7 of Eq. (10c). The odd-numbered input vector is latched on the output port of a register and latch block 112 for 4 clock cycles and dispatched to the four multipliers 143 to 146 via a multiplexor 123 for the computation of Eq. (10c).

In Table 3, the operations of the four multipliers 143 to 146 at different clock cycles are presented.

Table 3

| clock cycle | MUL(c1) | MUL(c3) | MUL(c5) | MUL(c7) |
|---|---|---|---|---|
| 1 | c1 x y1 | c3 x y3 | c5 x y5 | c7 x y7 |
| 2 | -c1 x y5 | c3 x y1 | -c5 x y7 | -c7 x y3 |
| 3 | -c1 x y3 | c3 x y7 | c5 x y1 | c7 x y5 |
| 4 | -c1 x y7 | c3 x y5 | -c5 x y3 | c7 x y1 |

The four components in each row are added in 3 adders 153, 154 and 162 at a corresponding clock cycle, thereby providing each element of the left part of Eq. (10c). As explained above, the odd IDCT block 200 multiplies the odd IDCT matrix with the odd-numbered input vector as shown in Eq. (10c).

The results of adder/subtractor 161 and adder 162 as presented by Eqs. (9a) and (9b) are added and subtracted at an adder 171 and a subtractor 172, respectively, to thereby provide the output data, e.g., x0 to x7. Specifically, 4 pairs of results, e.g. (x0, x7), (x1,x6), (x2, x5) and (x3, x4), are provided sequentially with the first component from the adder 171 and the second component from the subtractor 172, respectively. The results are provided sequentially one at a time and are rounded or clipped to predetermined bits at round/clip blocks 181 and 182, considering the dynamic range of the data processed in the system. The above procedure is repeated for a next input vector, i.e., another row of the NxN input matrix. While an input vector is latched on the output port of the register and latch blocks 111 and 112, a next input vector is inputted thereto, thereby enabling the processing of the subsequent input vector without stopping.

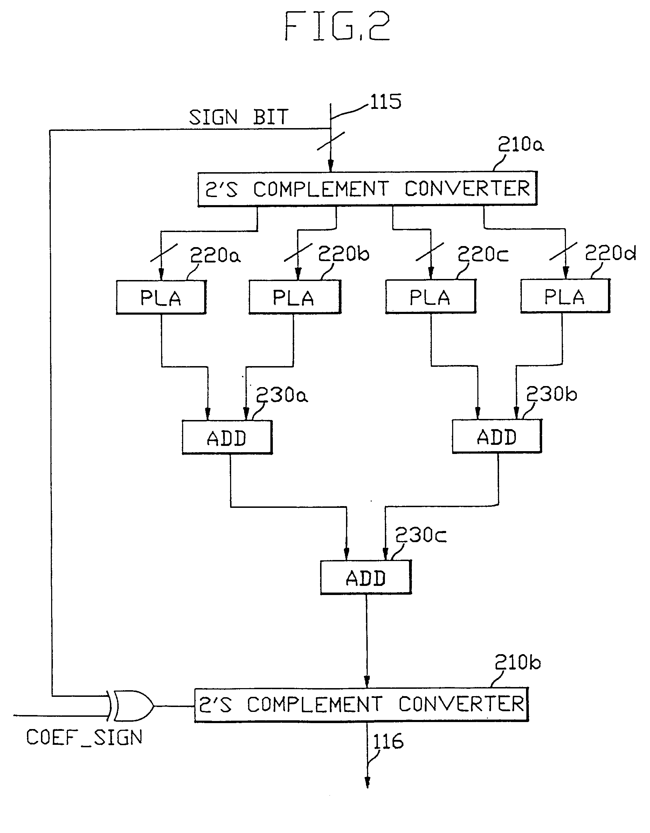

Referring to Fig. 2, there is shown a detailed block diagram of MUL(c2) 141 shown in Fig. 1. The multiplier includes 2's compliment converters 210a and 210b, PLAs 220a to 220d and adders 230a to 230c.

In accordance with the present invention, y2 or y6 of Eq. (10b) is inputted to MUL(c2) 141 on line 115 shown in Fig. 1. The four PLAs 220a to 220d and the 3 adders 230a to 230c perform a multiplication operation between two positive numbers, i.e., the absolute value of the input data and the predetermined multiplication coefficient which is one element, e.g., c2, of the IDCT matrices shown in Eqs. (10a) to (10c).

Therefore, in case the input is a negative number which is represented in a 2's complement form, it is first converted to a corresponding positive number at the first 2's complement converter 210a. An MSB (Most Significant Bit) or sign bit of the input is fed as SIGN BIT to the 2's complement converter 210a to determine whether the converting should take place therein.

The output from the 2's complement converter 210a is split into a multiplicity of, e.g., 4, groups of bits. Each of the PLAs receives each group of bits and provides a partial result of the multiplication corresponding to the group of input bits, wherein the partial result is the multiplication coefficient multiplied by the input bits. The structures of the PLAs can be predetermined based on the number of bits of the input and the multiplication coefficient. Specifically, one PLA includes all partial results for all the possible input bits and performs the multiplication operation by selecting one of the predetermined partial results in response to the input bits thereto. The four partial results from the four PLAs 220a to 220d are shifted and added at the adders 230a to 230c, to thereby provide a complete multiplied result. At the second 2's complement converter 210b, the sign of the multiplied result is determined. Specifically, if the input is positive and the multiplication coefficient is positive as in the 1st and 4th clock cycles of the 2nd column of Table 2, the result of adder 230c is provided as the output of MUL(c2) on line 116 shown in Fig. 1. In case both are negative, the result is the same. Otherwise, i.e., if one and only one of them is negative, the output of MUL(c2) is converted to the corresponding negative number at the second 2's complement converter 210b. Signals SIGN BIT and COEF_SIGN, which represent the sign of the input data and the multiplication coefficient, are inputted to the 2's complement converter 210b via an XOR(exclusive OR) gate to enable the above operation. The 2's complement converters 210a and 210b may also comprise PLAs to perform the conversion efficiently.

In this manner, the multipliers 141 to 146 shown in Fig. 1 perform the multiplication assigned in Tables 2 and 3 in a more efficient manner than the prior art methods which are based on the distributed arithmetic and bit-serial data structure. The detailed structure of the multiplier may vary depending on the number of bits of the input thereto and the multiplication coefficient, but its main structure remains similar to that of Fig. 2.

In a real application such as an image processing, IDCT is performed on an input matrix, i.e., two-dimensional DCT transformed data. A two-dimensional IDCT circuit can be constructed by using a pair of one-dimensional IDCT circuits described above. A two-dimensional DCT may be represented as:

$$Z = D^t Y D \qquad\qquad \text{Eq. (11)}$$

wherein **Z** is an NxN output matrix, or a transformed matrix; **Y** is an NxN input matrix; and $D^t$ is the transpose of the DCT matrix **D**.

Similarly, the two-dimensional IDCT is represented as:

$$Y = CZC^t \qquad \text{Eq. (12)}$$

wherein **Z** is an NxN input matrix, or a transformed matrix; **Y** is an NxN output matrix, or an inverse transformed matrix; and an IDCT matrix **C** can be obtained by inverting the DCT matrix **D**. Eq. (12) can be modified as:

$$Y = C(CZ^t)^t \qquad \text{Eq. (13)}$$

From the above equation, it can be easily seen that the two-dimensional IDCT is achievable by transposing the result of one-dimensional IDCT and again subjecting it to one-dimensional IDCT.

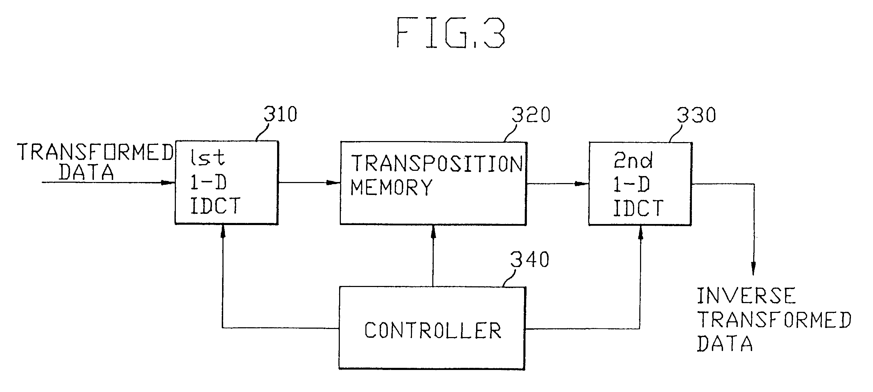

Referring to Fig. 3, there is shown an IDCT circuit of the present invention to perform the calculation of Eq. (13). The circuitry of Fig. 3 has a first 1-D (one-dimensional) IDCT circuit 310 for performing the IDCT matrix multiplication on an NxN input matrix to thereby provide an intermediate matrix, a transposition memory 320 for transposing the intermediate matrix, a second 1-D IDCT circuit 330 for subjecting the transposed intermediate matrix to another IDCT matrix multiplication, and a controller 340 for generating various control signals used in the IDCT circuit of the present invention.

The two 1-D IDCT circuits 310 and 330 are designed as explained in reference to Figs. 1 and 2. Therefore, a pair of input data, one of which is odd-numbered and the other is even-numbered, is inputted to the first 1-D IDCT circuit 310 at a same clock cycle, and a pair of elements of the intermediate matrix is provided in the manner explained above. The intermediate matrix provided from the first 1-D IDCT circuit 310 is transposed at the transposition memory 320, thereby being provided to the second 1-D IDCT circuit 330.

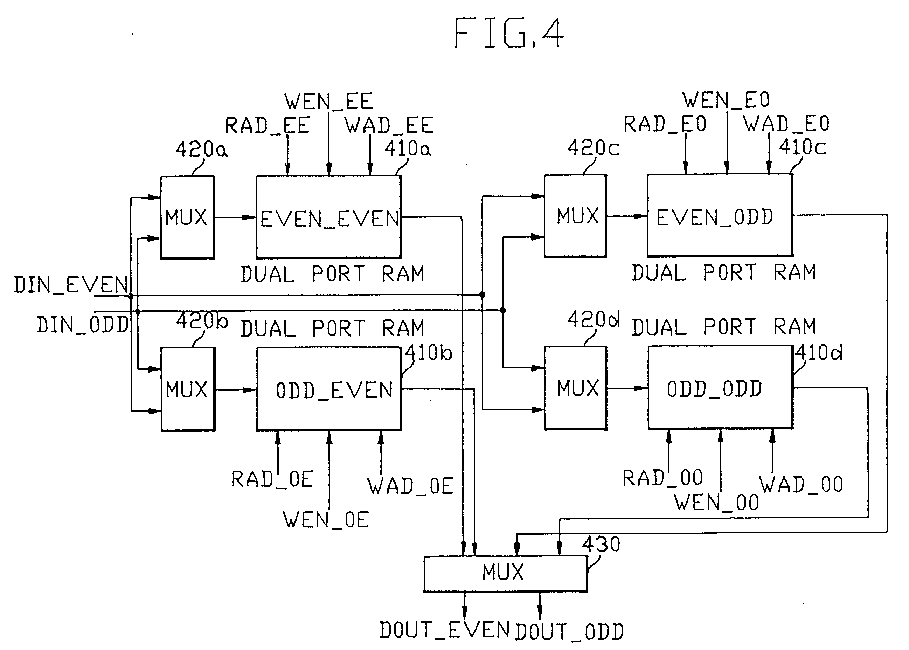

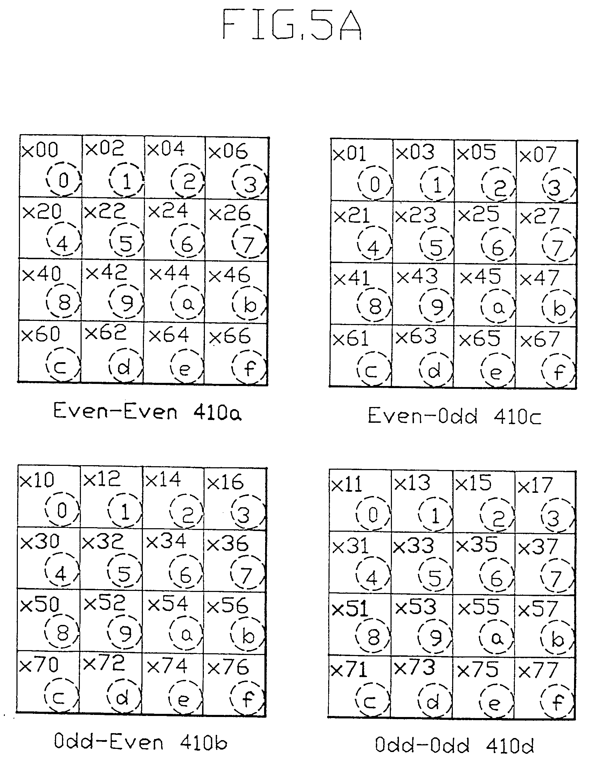

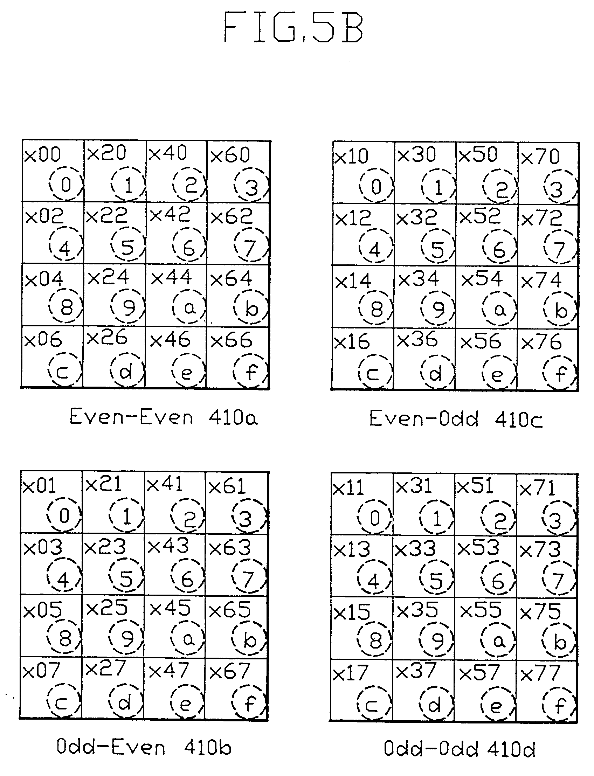

Referring to Fig. 4, there is illustrated a detailed structure of the transposition memory 320 shown in Fig. 3. The transposition memory 320 includes four dual port RAMs 410a to 410d each of which can accommodate 16 elements of the intermediate matrix and additional circuitry for the transposition operation. The intermediate matrix outputted from the 1-D IDCT circuit 310 is divided into 4 sets, i.e., even-even, odd-even, even-odd and odd-odd, and stored in the corresponding dual-port RAMs 410a to 410d as depicted in Fig. 5A or Fig. 5B, wherein xij means an element of the ith row and jth column of the intermediate matrix. For example, in case of Fig. 5A, the dual-port RAM Even_Even 410a stores the data whose column and row numbers are even and the dual-port RAM Even_Odd 410c stores the data whose column number is odd and row number is even. Numerals in the circles in Figs. 5A and 5B depict addresses of the corresponding dual-port RAMs. To provide the transposed intermediate matrix to the second 1-D IDCT circuit 330, the data is outputted in a different sequence from the input sequence of the intermediate matrix to the transposition memory 320.

As described above, the intermediate matrix provided on lines OUT_EVEN and OUT_ODD in Fig. 1 is inputted on lines DIN_EVEN and DIN_ODD as shown in Table 4:

Table 4

| write clock cycle | DIN_EVEN | DIN_ODD |
|---|---|---|
| 1 - 4 | x00,x01,x02,x03 | x07,x06,x05,x04 |
| 5 - 8 | x10,x11,x12,x13 | x17,x16,x15,x14 |
| 9 - 12 | x21,x22,x23,x24 | x27,x26,x25,x24 |
| . | . | . |
| . | . | . |
| . | . | . |
| 25 - 28 | x61,x62,x63,x64 | x67,x66,x65,x64 |
| 29 - 32 | x71,x72,x73,x74 | x77,x76,x75,x74 |

wherein xij (i=0, ..7, j=0,..7) denote an element of the intermediate matrix X represented as follows:

$$X = CZ^t \qquad \text{Eq. (14)}$$

In the above equation, $\mathbf{Z}^t$ is used instead $\mathbf{Z}$, which means that the input matrix is provided to the 1st 1-D IDCT circuit 310 row-by-row.

By comparing Table 4 with Figs. 5A and 5B, a sequence of addresses for the four dual-port RAMs 410a to 410d, for the writing of the intermediate matrix in a manner depicted in Figs. 5A and 5B can be easily deduced as shown in Table 5:

Table 5

| write clock cycle | Even_Even | Odd_Even | Even_Odd | Odd_Odd |
|---|---|---|---|---|
| 1 - 4 | 0,3,1,2 | x | 3,0,2,1 | x |
| 5 - 8 | x | 0,3,1,2 | x | 3,0,2,1 |
| 9 - 12 | 4,7,5,6 | x | 7,4,6,5 | x |
| 13 - 16 | x | 4,7,5,6 | x | 7,4,6,5 |
| 17 - 20 | 8,b,9,a | x | b,8,a,9 | x |
| 21 - 24 | x | 8,b,9,a | x | b,8,a,9 |
| 25 - 28 | c,f,d,e | x | f,c,e,d | x |
| 29 - 32 | x | c,f,d,e | x | f,c,e,d |
| 1 - 4 | 0,c,4,8 | c,0,8,4 | x | x |
| 5 - 8 | x | x | 0,c,4,8 | c,0,8,4 |
| 9 - 12 | 1,d,5,9 | d,1,9,5 | x | x |
| 13 - 16 | x | x | 1,d,5,9 | d,1,9,5 |
| 17 - 20 | 2,e,6,a | e,2,a,6 | x | x |
| 21 - 24 | x | x | 2,e,6,a | e,2,a,6 |
| 25 - 28 | 3,f,7,b | f,3,b,7 | x | x |
| 29 - 32 | x | x | 3,f,7,b | f,3,b,7 |

The upper half and lower half of Table 5 denote writing addresses for each of the four dual port RAMs 410a to 410d in accordance with Figs. 5A and 5B, respectively. In Table 5, x means that no data is stored in the corresponding dual-port RAM in those clock cycles.

The data stored in the dual-port RAMs 410a to 410d in the manner of Fig. 5A or Fig. 5B is provided in a tranposed sequence to the second 1-D IDCT circuit 330 on lines DOUT_EVEN and DOUT_ODD shown in Fig. 4. While the elements of the intermediate matrix currently stored in the dual-port RAMs, 410a to 410d, are retrieved therefrom, the next intermediate matrix calculated from a next input matrix is inputted thereto. To prevent any loss of data, the read and write operation of the dual-port RAMs 410a to 410d should be designed such that new data is stored in an address wherein previously stored intermediate matrix data has been already retrieved. To transpose the intermediate matrix currently stored as Fig. 5A, the first column of the intermediate matrix stored in the first columns of the dual-port RAMs 410a and 410b are retrieved first. After the data in the first column of dual-port RAMs 410a and 410b is retrieved, data of a next intermediate matrix can be written thereto in place of the retrieved data. First 8 data in the next block are stored in a manner of first columns of dual-port RAMs Even_Even 410a and Odd_Even 410b in Fig. 5B, to prevent the loss of the data in a currently stored intermediate matrix which remains in the second to forth columns of dual-port RAMs 410a and 410b. The remaining data of the next block are stored in the manner of Fig. 5B after the data stored at the corresponding position are retrieved. In conclusion, subsequent intermediate matrices are stored in the four dual-port RAMs 410a to 410d alternately, one time as shown in Fig. 5A and another time as shown in Fig. 5B. By doing so, subsequent blocks of data can be stored and transposed in the 4 dual-port RAMs without incurring a loss of data in the transposition process.

Referring back to Fig. 4, a block of data inputted in pairs from the first 1-D IDCT circuit 310 on lines DIN_EVEN and DIN_ODD is stored in the 4 dual-port RAMs in a manner depicted in Figs. 5A and 5B alternately by using 4 multiplexors 420a to 420d. A pair of elements of the intermediate matrix are provided from the dual-port RAMs 410a to 410d by way of a multiplexor 430, to thereby be coupled to the second 1-D IDCT circuit 330 shown in Fig. 3. This time the data is retrieved in a transposed sequence. Specifically, data in a first column, e.g., x00, x10, ... x70, is retrieved in the first 4 read clock cycles. Data in one column is retrieved in the similar manner with the writing sequence of one row. As described above, the transposed intermediate matrix data provided on lines DOUT_EVEN and DOUT_ODD in Fig. 3 is summarized in Table 6:

Table 6

| read clock cycle | DOUT_EVEN | DOUT_ODD |
|---|---|---|
| 1 - 4 | x00,x60,x20,x40 | x70,x10,x50,x30 |
| 5 - 8 | x01,x61,x21,x41 | x71,x11,x51,x31 |
| 9 - 12 | x02,x62,x22,x42 | x72,x12,x52,x32 |
| . . . | . . . | . . . |
| 25 - 28 | x06,x66,x26,x46 | x76,x16,x56,x36 |
| 29 - 32 | x07,x67,x27,x47 | x77,x17,x57,x37 |

By comparing the above sequence with Fig. 5A and 5B, it can be deduced that a sequence of read addresses for retrieving the data stored in the manner of Fig. 5A is the same as the write address sequence in accordance with Fig. 5B, and vice versa.

The read and write operations explained above can be summarized as shown in Tables 7a and 7b.

Table 7a

| clock | 1 | 2 | 3 | 4 | 5 | 6 | 7 | 8 | 9 | 10 | 11 | .. |
|---|---|---|---|---|---|---|---|---|---|---|---|---|
| write data | x00 | x06 | x02 | x04 | x10 | x16 | x12 | x14 | x20 | x26 | x22 | .. |
| | x07 | x01 | x05 | x03 | x17 | x11 | x15 | x13 | x27 | x21 | x25 | .. |
| write address | 0 | 3 | 1 | 2 | 0 | 3 | 1 | 2 | 4 | 7 | 5 | .. |
| | 3 | 0 | 2 | 1 | 3 | 0 | 2 | 1 | 7 | 4 | 6 | .. |
| read data | U | U | U | U | U | U | U | U | U | U | U | .. |
| | U | U | U | U | U | U | U | U | U | U | U | .. |
| read address | 2 | 0 | 3 | 1 | 2 | 4 | 7 | 5 | 6 | 4 | 7 | .. |
| | 1 | 3 | 0 | 2 | 1 | 7 | 4 | 6 | 5 | 7 | 4 | .. |

Table 7b

| clock | 27 | 28 | 29 | 30 | 31 | 32 | 33 | 34 | 35 | 36 | .. |
|---|---|---|---|---|---|---|---|---|---|---|---|
| write data | x62 | x64 | x70 | x76 | x72 | x74 | x00 | x06 | x02 | x04 | .. |
|  | x65 | x63 | x77 | x71 | x75 | x73 | x07 | x01 | x05 | x03 | .. |
| write address | d | e | c | f | d | e | 0 | c | 4 | 8 | .. |
|  | e | d | f | c | e | d | c | 0 | 8 | 4 | .. |
| read data | U | U | U | x00 | x60 | x20 | x40 | x01 | x61 | x21 | .. |
|  | U | U | U | x70 | x10 | x50 | x30 | x71 | x11 | x51 | .. |
| read address | f | d | e | 0 | c | 4 | 8 | 0 | c | 4 | .. |
|  | c | e | d | c | 0 | 8 | 4 | c | 0 | 8 | .. |

A read cycle starts with a 30th write clock cycle in Table 7b to prevent a loss of data as explained above: that is, after 29x2 data of the intermediate matrix is inputted and stored in the dual-port RAMs via each input line DIN_EVEN and DIN_OUT, first 2 elements, e.g., x00 and x70, of the transposed intermediate matrix are retrieved therefrom on lines DOUT_EVEN and DOUT_ODD. The read and write clock cycles are determined such that data in an address is retrieved only after an element of the current intermediate matrix is written thereto, and stored data in the address is replaced by an element of a next intermediate matrix only after it is retrieved therefrom. Note that x70 is written in a 29th write clock cycle and retrieved in the 1st read cycle or 30th write cycle. Sequences of addresses are generated in a timely manner to enable the read and write operation described above.

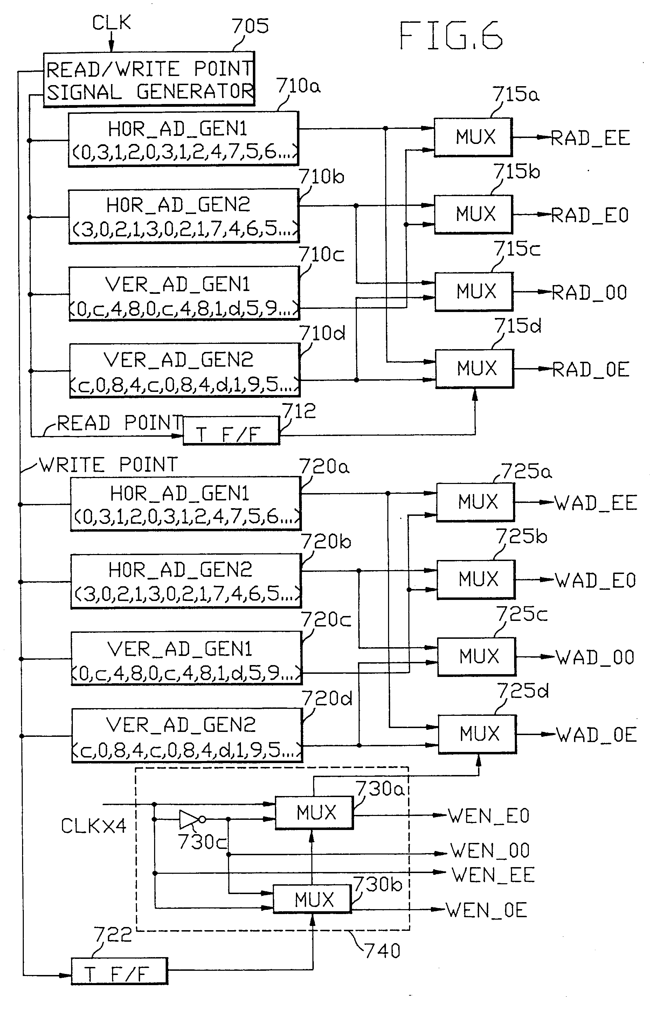

Referring back to Fig. 4, 2 address signals, e.g, read address RAD_EE and write address WAD_EE, are inputted to each of the dual-port RAMs 410a to 410d. Write enable input signal, WEN_EE, serves to determine whether it is possible to write data onto the corresponding dual-port RAM. When data is not to be written into a dual-port RAM, e.g., as represented by x in Table 5, the write operation of the dual-port RAM is disabled so that irrelevant data cannot be written thereto. Various signals presented above, e.g., RAD_EE, WEN_OE, WAD_OO, are generated using the circuitry shown in Fig. 6. The circuitry depicted in Fig. 6 may be incorporated in the controller 340 shown in Fig. 3.

A read/write point signal generator 705 provides a read and a write point signals in response to a clock signal. The read point signal indicates a start of read operation of each intermediate matrix to the transposition memory 320, while the write point signal indicates a start of write operation for each of the intermediate matrices. For example, the write point signal may be enabled at the 1st and 33th write clock cycles while the read point signal may be enabled at the 30th write clock cycle in Tables 7a and 7b.

There are shown 8 address generators 710a to 710d and 720a to 720d, each of which generates a sequence of addresses specified in the parenthesis. HOR_AD_GEN1 720a and HOR_AD_GEN2 720b generate write addresses for storing data as in Fig. 5A, while HOR_AD_GEN1 710a and HOR_AD_GEN2 710b generate read addresses for retrieving data which has been stored as in Fig. 5B. Similarly, VER_AD_GEN1 720c and VER_AD_GEN2 720d generate write addresses for storing data as in Fig. 5B, while VER_AD_GEN1 710c and VER_AD_GEN2 720d generate read addresses for retrieving data which has been stored as in Fig. 5A. As explained above, the read and write addresses are generated alternately on a block-by-block basis by using T flip-flops 712 and 722 and multiplexors 715a to 715d and 725a to 725d. The read address signals RAD_EE, RAD_EO, RAD_OE and RAD_OO, and the write address signals WAD_EE, WAD_EO, WAD_OE and WAD_OO are provided to the corresponding dual-port RAMs as shown in Fig. 4.

For the writing operation, write enable signals are also generated. Two of the 4 dual-port RAMs are write enabled at the same time as specified in Table 5 by using the enable signal generating circuit 740 shown in Fig. 6.

By using the address and enable signals explained above, the transposed intermediate matrix is inputted to the second 1-D IDCT circuit 330 shown in Fig. 3.

Referring to Tables 7a and 7b, the sequence of read data or input data to the second 1-D IDCT circuit 330 is different from the input data sequence to the 1st 1-D IDCT circuit 310. Specifically, the data of the first intermediate matrix, e.g., x00, x60, x20, x40, is coupled to the 2nd 1-D IDCT circuit 330. The second 1-D IDCT circuit 330 performs the same operation with the first 1-D IDCT circuit 310 except that the former operates with different input data. Therefore, the second 1-D IDCT circuit 330 can also be constructed as depicted in Fig. 1. An input vector is sequentially inputted, stored and latched in the register and latch blocks 111 and 112 shown in Fig. 1; and, therefore, the operation of the circuitry in Fig. 1 except the register and latch blocks 111 and 112 is identical for the first and second 1-D IDCT circuits.

Using the two-dimensional IDCT circuit explained above, the two-dimensional IDCT is achieved by transposing the result of one-dimensional IDCT and again subjecting it to one-dimensional IDCT.

While the present invention has been described with respect to the particular embodiments, it will be apparent to those skilled in the art that various changes and modifications may be made without departing from the spirit and scope of the invention as defined in the following claims.

**Claims**

1. A one-dimensional Inverse Discrete Cosine Transform (IDCT) circuit for performing an IDCT operation on N input data to thereby provide N output data, wherein said N input data consists of N/2 odd-numbered input data and N/2 even-numbered input data, comprising:

   first multiplication means for performing a predetermined even IDCT matrix multiplication on said even-numbered input data, thereby providing a first set of N/2 intermediate data, wherein said first means includes a plurality of multipliers and a multiplicity of adders to perform the even IDCT matrix multiplication on the N/2 even-numbered input data;

   second multiplication means for performing a predetermined odd IDCT matrix multiplication on said odd-numbered input data, thereby providing a second set of N/2 intermediate data, wherein said second means includes a host of multipliers and a multitude of adders to perform the odd IDCT matrix multiplication on the N/2 odd-numbered input data;

   addition means for adding each of the first set of N/2 intermediate data to each corresponding data of the second set of intermediate data, to thereby provide first N/2 output data; and

   subtraction means for subtracting each of the second set of N/2 intermediate data from each corresponding data of the first set of N/2 intermediate data, to thereby provide second N/2 output data.

2. The circuit of claim 1, wherein each of the said multipliers multiplies a predetermined multiplication coefficient included in the odd or even IDCT matrix with an input data thereto, comprising:

   means for converting said input data to its 2's complement in case the input data is a negative number;

   means for dividing the input data into a predetermined number of groups of input bits;

   a predetermined number of Programmable Logic Arrays each of which includes partial products for all possible groups of input bits and selects one of the partial products corresponding to each of said groups of input bits;

   means for adding the selected partial products, to thereby provide a multiplied result which is an abosilute value of a multipplication between the input data and the multiplication coefficient;

   means for deciding the sign of the multiplied result based on the sign of the predetermined multiplication coefficient and the input data; and

   means for converting the multiplied result to its 2's complement in case the sign of the multiplied result is determined to be negative.

3. The circuit of claim 1, wherein said N is 8; said even IDCT matrix multiplication is represented as:

$$\begin{pmatrix} x_0+x_7 \\ x_1+x_6 \\ x_2+x_5 \\ x_3+x_4 \end{pmatrix} = \begin{pmatrix} c_4 & c_2 & c_4 & c_6 \\ c_4 & c_6 & -c_4 & -c_2 \\ c_4 & -c_6 & -c_4 & c_2 \\ c_4 & -c_2 & c_4 & -c_6 \end{pmatrix} \cdot \begin{pmatrix} y_0 \\ y_2 \\ y_4 \\ y_6 \end{pmatrix}, \text{ and}$$

said odd IDCT matrix multiplication is represented as:

$$\begin{pmatrix} x_0-x_7 \\ x_1-x_6 \\ x_2-x_5 \\ x_3-x_4 \end{pmatrix} = \begin{pmatrix} c_1 & c_3 & c_5 & c_7 \\ c_3 & -c_7 & -c_1 & -c_5 \\ c_5 & -c_1 & c_7 & c_3 \\ c_7 & -c_5 & c_3 & -c_1 \end{pmatrix} \cdot \begin{pmatrix} y_1 \\ y_3 \\ y_5 \\ y_7 \end{pmatrix}$$

and the first and the second sets of the intermediate data include (x0+x7), (x1+x6), (x2+x5) and (x3+x4), and (x0-x7), (x1-x6), (x2-x5) and (x3-x4), respectively, wherein (y0, y1, y2 ... y7) denote the N input data and (x0, x1, x2, ... x7) denote the N output data.

**4.** The circuit of claim 3, wherein said even IDCT matrix multiplication is modified as:

$$\begin{pmatrix} x_0+x_7+x_3+x_4 \\ x_1+x_6+x_2+x_5 \end{pmatrix} = \begin{pmatrix} c_4 & c_4 \\ c_4 & -c_4 \end{pmatrix} \cdot \begin{pmatrix} y_0 \\ y_4 \end{pmatrix}$$

$$\begin{pmatrix} x_1+x_6-x_2-x_5 \\ x_0+x_7-x_3-x_4 \end{pmatrix} = \begin{pmatrix} -c_2 & c_6 \\ c_6 & c_2 \end{pmatrix} \cdot \begin{pmatrix} y_6 \\ y_2 \end{pmatrix}$$

**5.** A two-dimensional IDCT circuit for performing an IDCT operation on an NxN input matrix by a row-column decomposition method to provide an NxN output matrix, comprising:

(a) a first IDCT circuit for performing a one-dimensional IDCT on the NxN input matrix by multiplying a predetermined IDCT matrix therewith to yield an NxN intermediate matrix, including a plurality of multipliers, each of which multiplies a predetermined multiplication coefficient included in the IDCT matrix with an input data thereto which is an element of said NxN input;
(b) NxN transposition memory;
(c) means for storing said NxN intermediate matrix in said NxN transposition memory;
(d) a second IDCT circuit for performing a one-dimensional IDCT on the transpose of the NxN intermediate matrix stored in the NxN transposition memory by multiplying the predetermined IDCT matrix therewith to yield said NxN output matrix, including a plurality of multipliers, each of which multiplies a predetermined multiplication coefficient included in the IDCT matrix with an input data thereto which is an element of said NxN intermediate matrix; and
(e) means for reading out the transpose of the NxN intermediate matrix from the NxN transposition memory, to be inputted to the second IDCT circuit,

wherein each of said multipliers included in the first and the second IDCT circuits having:

(i) means for converting said input data to its 2's complement in case the input data is a negative number;
(ii) means for dividing the input data into a predetermined number of groups of input bits;
(iii) a predetermined number of Programmable Logic Arrays, each of which includes a partial products for all possible groups of input bits and selects one of the partial products corresponding to each of said groups of input bits;
(iv) means for adding the selected partial products, to thereby provide a multiplied result which is an absolute value of a multipplication between the input data and the multiplication coefficient;;
(v) means for deciding the sign of the multiplied result based on the sign of the predetermined multiplication coefficient and the input data; and
(vi) means for converting the multiplied result to its 2's complement in case the sign of the multiplied result is determined to be negative.

**6.** The circuit of claim 5, wherein said N is 8; said IDCT matrix multiplication for the first and second IDCT circuits is represented as:

$$\begin{pmatrix} x_0+x_7 \\ x_1+x_6 \\ x_2+x_5 \\ x_3+x_4 \end{pmatrix} = \begin{pmatrix} c_4 & c_2 & c_4 & c_6 \\ c_4 & c_6 & -c_4 & -c_2 \\ c_4 & -c_6 & -c_4 & c_2 \\ c_4 & -c_2 & c_4 & -c_6 \end{pmatrix} \cdot \begin{pmatrix} y_0 \\ y_2 \\ y_4 \\ y_6 \end{pmatrix} \text{, and}$$

$$\begin{pmatrix} x_0-x_7 \\ x_1-x_6 \\ x_2-x_5 \\ x_3-x_4 \end{pmatrix} = \begin{pmatrix} c_1 & c_3 & c_5 & c_7 \\ c_3 & -c_7 & -c_1 & -c_5 \\ c_5 & -c_1 & c_7 & c_3 \\ c_7 & -c_5 & c_3 & -c_1 \end{pmatrix} \cdot \begin{pmatrix} y_1 \\ y_3 \\ y_5 \\ y_7 \end{pmatrix}$$

wherein (y0, y1, y2 ... y7) denote one row of the input matrix and (x0, x1, x2, ... x7) denote one row of the intermediate matrix for the first IDCT circuit; and (y0, y1, y2 ... y7) denote one row of the intermediate matrix and (x0, x1, x2, ... x7) denote one row of the output matrix for the second IDCT circuit.

FIG.1

EP 0 720 103 A1

# FIG.2

EP 0 720 103 A1

# FIG.3

TRANSFORMED
DATA

310

1st
1-D
IDCT

320

TRANSPOSITION
MEMORY

330

2nd
1-D
IDCT

340

CONTROLLER

INVERSE
TRANSFORMED
DATA

FIG.4

# FIG.5A

| x00 (0) | x02 (1) | x04 (2) | x06 (3) |
| x20 (4) | x22 (5) | x24 (6) | x26 (7) |
| x40 (8) | x42 (9) | x44 (a) | x46 (b) |
| x60 (c) | x62 (d) | x64 (e) | x66 (f) |

Even-Even 410a

| x01 (0) | x03 (1) | x05 (2) | x07 (3) |
| x21 (4) | x23 (5) | x25 (6) | x27 (7) |
| x41 (8) | x43 (9) | x45 (a) | x47 (b) |
| x61 (c) | x63 (d) | x65 (e) | x67 (f) |

Even-Odd 410c

| x10 (0) | x12 (1) | x14 (2) | x16 (3) |
| x30 (4) | x32 (5) | x34 (6) | x36 (7) |
| x50 (8) | x52 (9) | x54 (a) | x56 (b) |
| x70 (c) | x72 (d) | x74 (e) | x76 (f) |

Odd-Even 410b

| x11 (0) | x13 (1) | x15 (2) | x17 (3) |
| x31 (4) | x33 (5) | x35 (6) | x37 (7) |
| x51 (8) | x53 (9) | x55 (a) | x57 (b) |
| x71 (c) | x73 (d) | x75 (e) | x77 (f) |

Odd-Odd 410d

# FIG.5B

| | | | |
|---|---|---|---|
| x00 (0) | x20 (1) | x40 (2) | x60 (3) |
| x02 (4) | x22 (5) | x42 (6) | x62 (7) |
| x04 (8) | x24 (9) | x44 (a) | x64 (b) |
| x06 (c) | x26 (d) | x46 (e) | x66 (f) |

Even-Even 410a

| | | | |
|---|---|---|---|
| x10 (0) | x30 (1) | x50 (2) | x70 (3) |
| x12 (4) | x32 (5) | x52 (6) | x72 (7) |
| x14 (8) | x34 (9) | x54 (a) | x74 (b) |
| x16 (c) | x36 (d) | x56 (e) | x76 (f) |

Even-Odd 410c

| | | | |
|---|---|---|---|
| x01 (0) | x21 (1) | x41 (2) | x61 (3) |
| x03 (4) | x23 (5) | x43 (6) | x63 (7) |
| x05 (8) | x25 (9) | x45 (a) | x65 (b) |
| x07 (c) | x27 (d) | x47 (e) | x67 (f) |

Odd-Even 410b

| | | | |
|---|---|---|---|
| x11 (0) | x31 (1) | x51 (2) | x71 (3) |
| x13 (4) | x33 (5) | x53 (6) | x73 (7) |
| x15 (8) | x35 (9) | x55 (a) | x75 (b) |
| x17 (c) | x37 (d) | x57 (e) | x77 (f) |

Odd-Odd 410d

FIG.6

**European Patent Office**

## EUROPEAN SEARCH REPORT

Application Number

EP 94 12 0917

### DOCUMENTS CONSIDERED TO BE RELEVANT

| Category | Citation of document with indication, where appropriate, of relevant passages | Relevant to claim | CLASSIFICATION OF THE APPLICATION (Int.Cl.6) |
|---|---|---|---|
| X | DE-A-43 45 029 (ELECTRONICS AND TELECOMUNICATIONS RESEARCH INSTITUTE, DAEJON, KOREA) 7 July 1994 | 1,3,4 | G06F17/14 |
| Y | * the whole document * | 2,5,6 | |
| Y | EP-A-0 621 543 (GENERAL INSTRUMENT CORPORATION OF DELAWARE, US) 26 October 1994 <br> * page 7, line 1 - page 9, line 22 * <br> * page 10, line 46 - page 11, line 27 * | 2,5,6 | |
| X | US-A-5 181 183 (TAKASHI MIYAZAKI) 19 January 1993 <br> * column 2, line 56 - column 7, line 58 * <br> * column 10, line 56 - column 11, line 27 * | 1,3,4 | |
| X | EP-A-0 506 111 (MITSUBISHI DENKI KABUSHIKI KAISHA, JP) 30 September 1992 <br> * page 5, line 54 - page 8, line 44 * | 1 | |
| A | * page 10, line 48 - page 12, line 40 * | 3,4 | TECHNICAL FIELDS SEARCHED (Int.Cl.6) |
| X | IEEE TRANSACTIONS ON CIRCUITS AND SYSTEMS FOR VIDEO TECHNOLOGY, vol. 2,no. 2, June 1992 NEW YORK US, pages 123-134, XP 000280652 HIROSHI FUJIWARA ET AL 'An All - ASIC Implementation of a Low Bit-rate Video Codec' | 1 | G06F |
| A | * page 127, right column, line 12 - page 128, right column, line 50 * <br> * page 129, left column, line 3 - page 130, left column, line 5 * | 2,5,6 | |
| A | EP-A-0 575 675 (PIONEER DIGITAL DESIGN CENTRE LIMITED, GB) 29 December 1993 <br> * page 8, line 55 - page 13, line 2 * <br> * page 13, line 30 - page 20, line 50 * | 1-6 | |

-/--

The present search report has been drawn up for all claims

| Place of search | Date of completion of the search | Examiner |
|---|---|---|
| THE HAGUE | 30 May 1995 | Barba, M |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

EP 0 720 103 A1

## DOCUMENTS CONSIDERED TO BE RELEVANT

| Category | Citation of document with indication, where appropriate, of relevant passages | Relevant to claim | CLASSIFICATION OF THE APPLICATION (Int.Cl.6) |
|---|---|---|---|
| A | EP-A-0 376 683 (KABUSHIKI KAISHA TOSHIBA, JP) 4 July 1990<br>* page 5, line 41 – page 6, line 32 *<br>* page 8, line 27 – page 9, line 10 *<br>* page 10, line 47 – page 11, line 28 *<br>--- | 1-6 | |
| A | INTERNATIONAL JOURNAL OF ELECTRONICS, vol. 69,no. 2, August 1990 LONDON GB, pages 233-246, XP 000148312 K.W.CURRENT ET AL 'Unified forward and inverse discrete cosine transform architecture and proposed VLSI implementation'<br>* page 239, line 1 – page 240, line 9 *<br>----- | 2,5,6 | |

TECHNICAL FIELDS SEARCHED (Int.Cl.6)

The present search report has been drawn up for all claims

| Place of search | Date of completion of the search | Examiner |
|---|---|---|
| THE HAGUE | 30 May 1995 | Barba, M |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document